# EUROPEAN PATENT SPECIFICATION

(11) **EP 4 240 676 B1**
(45) Date of publication and mention of the grant of the patent: **13.08.2025**
(21) Application number: 21807090.2
(22) Date of filing: 08.11.2021
(51) Int. Cl.: B65G 1/04, A62C 3/00

(54) **STORAGE SYSTEM AND STORAGE CONTAINER**
LAGERSYSTEM UND LAGERBEHÄLTER
SYSTÈME DE STOCKAGE ET CONTENANT DE STOCKAGE

(30) Priority: 06.11.2020 GB 202017601
(43) Date of publication of application: 13.09.2023
(73) Proprietor: Ocado Innovation Limited, Hatfield, Hertfordshire AL10 9UL (GB)
(72) Inventor: PARKS, Ian, Hatfield Hertfordshire AL10 9UL (GB)
(74) Representative: Ocado Group IP Department
(86) International application number: PCT/EP2021/080978
(87) International publication number: WO 2022/096726

(56) References cited:
- WO-A1-2019/233749
- US-A1- 2005 113 500
- US-A1- 2010 038 817
- US-A1- 2011 036 853
- US-A1- 2019 240 517

## Description

### TECHNICAL FIELD

The present invention relates to the field of storage systems comprising load handling devices operative on tracks located on a grid framework structure for handling storage containers stacked in the grid framework structure, and storage containers for use in such storage systems.

### BACKGROUND

Some commercial and industrial activities require systems that enable the storage and retrieval of a large number of different products. One known type of system for the storage and retrieval of items in multiple product lines involves arranging storage containers (also known as bins or totes) in stacks on top of one another, the stacks being arranged in rows. The storage containers are removed from the stacks and accessed from above by load handling devices, removing the need for aisles between the rows and thereby allowing a large number of containers to be stored in a given space.

WO2015/185628A describes a storage and fulfilment system in which stacks of storage containers are arranged within a grid framework structure. The containers are accessed by load handling devices operative on tracks located on the top of the grid framework structure.

The storage containers in such storage systems are typically made of a thermoplastic material and may be formed by injection moulding or blow moulding, for example. Examples of thermoplastic materials include polypropylene, polyethylene (e.g. high density polyethylene (HDPE), acrylonitrile butadiene styrene (ABS) and polycarbonate.

WO 2019/233749 (Autostore Tech AS) teaches a service vehicle for extinguishing fire on and within an automated storage and retrieval system and a method for operating such a service vehicle. The service vehicle comprises caterpillar tracks allowing movement of the service vehicle across a rail system and a fire extinguisher compartment for containing firefighting equipment.

US 2011/036853 (Ramsey Brian et al) teaches a container assembly having a container body and exterior shelf structures that are each reversibly attached to exterior surfaces of first and second sidewalls of the container body.

US 2010/038817 (Glende David Christopher et al) teaches a method and device for the production of thermoplastics containing coarse-scale and/or nanoscale, coated, deagglomerated magnesium hydroxide particles that are supplied to the thermoplastic in the form of a dispersion or suspension in an aqueous or organic solvent, and mixed with the themoplastic. The thermoplastics filled with magnesium hydroxide particles demonstrate improved mechanical properties, particularly an improved modulus of elasticity and low brittleness.

A problem with using thermoplastic storage containers in the storage systems described above is that they can be highly flammable, and given that the storage system may contain hundreds or thousands of storage containers, the storage containers pose a significant risk in the event of a fire.

### SUMMARY OF INVENTION

In a first aspect, the present invention provides a storage system comprising:
a plurality of grid members arranged in a grid pattern to form a grid structure comprising a plurality of grid cells;
one or more stacks of storage containers, wherein each stack is located vertically below a respective grid cell, and each storage container in each stack is made of a material comprising thermoplastic and a fire retardant agent; and
at least one load handling device comprising a grabber device operative to move on the grid structure to releasably grab one or more of the storage containers from each stack in the storage system.

In the storage system of the present invention, a large number of thermoplastic storage containers may be densely arranged within the grid structure. Due to the flammability of thermoplastic, this may present a fire risk, particularly if the storage containers are being used to store food items, which act as a source of fuel. The dense arrangement of storage containers may also hinder firefighting measures, particularly if a fire starts in a central region of the grid structure, which may not easily accessible. By using thermoplastic storage containers comprising a fire retardant agent within the grid structure, the spread of a fire within the grid structure can be slowed down to allow more time for firefighting systems to control the fire and limit damage to the rest of the storage system.

According to the invention the fire retardant agent is magnesium hydroxide and/or aluminium hydroxide. These fire retardant agents are generally considered safe when used as an additive in plastic articles that are intended to come into contact with food, and are therefore useful in storage systems intended to store food items.

The material of each storage container may comprise 20 to 55 wt% magnesium hydroxide.

The material of the invention comprises 30 to 50 wt% magnesium hydroxide. The material may comprise 40 to 50 wt% magnesium hydroxide. The material may comprise 45 to 50 wt% magnesium hydroxide. The material may comprise approximately 45 wt% magnesium hydroxide.

The thermoplastic may comprise a polyolefin, e.g. polypropylene or polyethylene, including copolymers thereof. The thermoplastic may comprise high-density polyethylene (HDPE). The thermoplastic may be acrylonitrile butadiene styrene (ABS) or polycarbonate. The thermoplastic may be a single thermoplastic, or a blend of thermoplastics.

The material may consist essentially of thermoplastic and magnesium hydroxide. The proportion of the material that is not magnesium hydroxide may comprise 98 to 100 wt% thermoplastic. The proportion of the material that is not magnesium hydroxide may comprise 99 to 100 wt% thermoplastic. The material may consist of thermoplastic, magnesium hydroxide and 0 to 2 wt% other substances. The material may consist of thermoplastic, magnesium hydroxide and 0 to 1 wt% other substances. Such other substances may be one or more impact modifiers for improving the impact resistance of the material, or other additives. The material may comprise one or more impact modifiers. The material may comprise one or more impact modifiers up to a total of 10 wt%. The impact modifiers may be any known or commercially available impact modifiers. The material may comprise magnesium hydroxide in the proportions mentioned above and one or more impact modifiers up to 10 wt%, with the remaining portion being essentially thermoplastic.

The material may be free of any halogenated fire retardants (e.g. chlorinated or brominated fire retardants) and/or may be free of any phosphorous fire retardants.

The material is preferably food contact safe, i.e. meets the requirements of at least one regulation governing plastic materials intended to come into contact with food. For example, the material may meet the requirements of Commission Regulation (EU) No 10/2011 of 14 January 2011 and/or US FDA 21 CFR.

Each storage container may comprise one or more non-perforated sidewalls, i.e. the sidewalls do not comprise any apertures/cutouts extending horizontally through the sidewalls. Thus, when the storage containers are stacked, there are minimal openings between the storage containers in the stack for air to pass through. This may help to reduce the supply of oxygen to a fire, which may help to reduce the spread of the fire.

Each storage container may have been formed by injection moulding or blow moulding.

The storage system may further comprise a plurality of upright columns supporting the grid structure from below. The upright columns may be arranged to form a plurality of vertical storage locations for each stack of storage containers.

The horizontal gap between stacks of storage containers in adjacent grid cells may be at least approximately 50 mm. For example, the gap may be 50 mm, 100 mm, 150 mm, or any distance therebetween.

Each of the plurality of grid members may comprise a track or a rail. The track or the rail may be mounted to each of the plurality of grid members, or integrated with each of the plurality of grid members as a single body.

In a second aspect, the present invention provides a storage container for storing one or more items in a storage system according to the first aspect, the storage container comprising a base, at least one sidewall extending from the base, and a rim, wherein the rim defines at least one aperture for engaging with a corresponding member of a grabber device, and wherein the storage container is made of a material comprising thermoplastic and a fire retardant agent.

The fire retardant agent of the invention is magnesium hydroxide and/or aluminium hydroxide.

The material of the storage container may comprise 20 to 55 wt% magnesium hydroxide. The material of the invention comprises 30 to 50 wt% magnesium hydroxide. The material may comprise 40 to 50 wt% magnesium hydroxide. The material may comprise 45 to 50 wt% magnesium hydroxide. The material may comprise approximately 45 wt% magnesium hydroxide.

The thermoplastic may comprise a polyolefin, e.g. polypropylene or polyethylene, including copolymers thereof. The thermoplastic may comprise high-density polyethylene (HDPE). The thermoplastic may be acrylonitrile butadiene styrene (ABS) or polycarbonate. The thermoplastic may be a single thermoplastic, or a blend of thermoplastics.

The material may consist essentially of thermoplastic and magnesium hydroxide. The proportion of the material that is not magnesium hydroxide may comprise 98 to 100 wt% thermoplastic. The proportion of the material that is not magnesium hydroxide may comprise 99 to 100 wt% thermoplastic. The material may consist of thermoplastic, magnesium hydroxide and 0 to 2 wt% other substances. The material may consist of thermoplastic, magnesium hydroxide and 0 to 1 wt% other substances. Such other substances may be one or more impact modifiers for improving the impact resistance of the material, or other additives. The material may comprise one or more impact modifiers. The material may comprise one or more impact modifiers up to a total of 10 wt%. The impact modifiers may be any known or commercially available impact modifiers. The material may comprise magnesium hydroxide in the proportions mentioned above and one or more impact modifiers up to 10 wt%, with the remaining portion being essentially thermoplastic.

Each storage container may comprise one or more non-perforated sidewalls, i.e. the sidewalls do not comprise any apertures/cutouts extending horizontally through the sidewalls. Thus, when the storage containers are stacked, there are minimal openings between the storage containers in the stack for air to pass through. This may help to reduce the supply of oxygen to a fire, which may help to reduce the spread of the fire.

The material may be free of any halogenated fire retardants (e.g. chlorinated or brominated fire retardants) and/or may be free of any phosphorous fire retardants.

The material is preferably food contact safe, i.e. meets the requirements of at least one regulation governing plastic materials intended to come into contact with food. For example, the material may meet the requirements of Commission Regulation (EU) No 10/2011 of 14 January 2011 and/or US FDA 21 CFR.

The storage container may have been formed by injection moulding or blow moulding.

The storage container may comprise four side walls extending from the base. The rim of the storage container may define four corners of the storage container. The rim may define four apertures, each aperture being located at or near a corner of storage container.

### BRIEF DESCRIPTION OF THE DRAWINGS

Figure 1 is a schematic diagram of a grid framework structure of a storage system.
Figure 2 is a schematic diagram of a top down view showing a stack of storage containers arranged within the grid framework structure of Figure 1.
Figure 3 is a schematic diagram of the storage system of Figure 1 with a load handling device operating on the grid framework structure.
Figure 4 is a schematic perspective view of a load handling device showing a lifting device gripping a storage container from above.
Figures 5(a) and 5(b) are schematic perspective cut-away views of the load handling device of Figure 4 showing (a) the container receiving space of the load handling device; and (b) a storage container accommodating the container receiving space of the load handling device.
Figure 6 is a schematic perspective view of a grabber device of the load handling device.
Figure 7 is a perspective view of a storage container.
Figure 8 is a schematic perspective view of another storage container.
Figure 9 is a graph showing the rate of heat release over time for material samples having different proportions of magnesium hydroxide.

### DETAILED DESCRIPTION

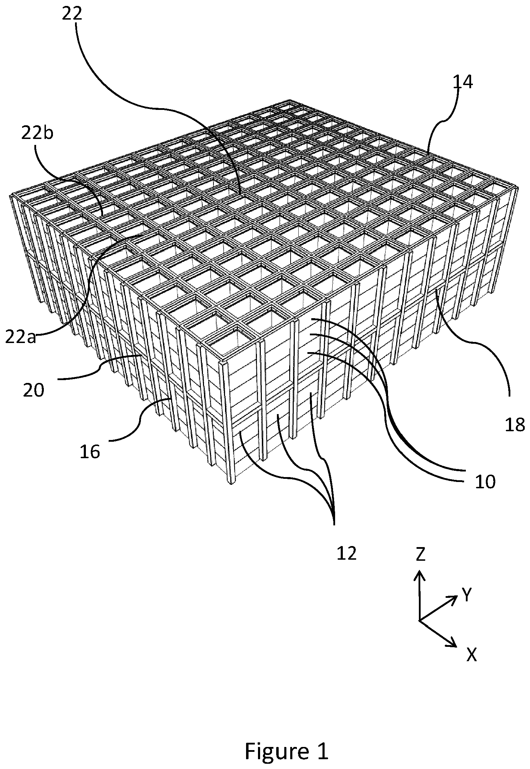

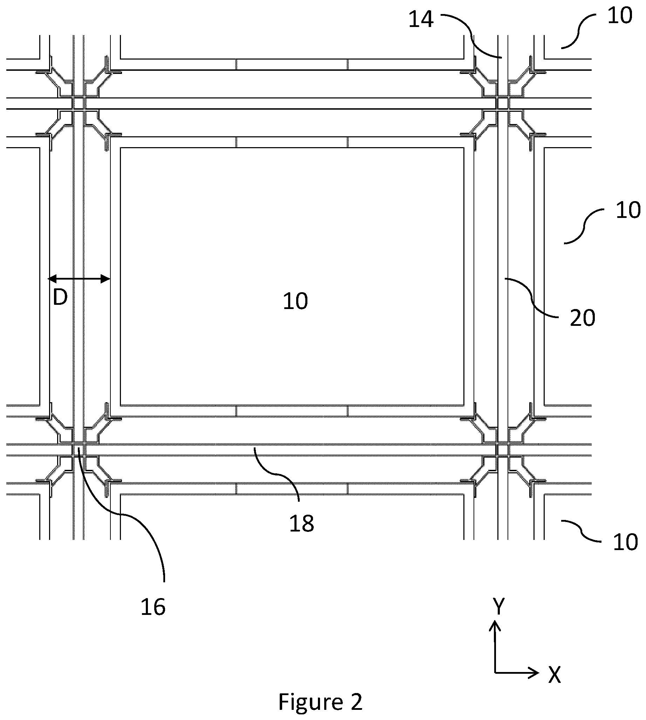

As shown in Figures 1 and 2, storage containers 10, also known as bins or totes, are stacked on top of one another to form stacks 12. The stacks 12 are arranged in a grid framework structure 14 in a warehousing or manufacturing environment. The grid framework is made up of a plurality of storage columns or grid columns. Each grid in the grid framework structure has at least one grid column for storage of a stack of containers. Figure 1 is a schematic perspective view of the grid framework structure 14, and Figure 2 is a top-down view showing a stack 12 of containers 10 arranged within the framework structure 14. Each container 10 typically holds a plurality of product items (not shown), and the product items within a container 10 may be identical, or may be of different product types depending on the application. Each container 10 may be used to store grocery items (i.e. food items), for example.

The grid framework structure 14 comprises a plurality of upright members or upright columns 16 that support horizontal members 18, 20. A first set of parallel horizontal grid members 18 is arranged perpendicularly to a second set of parallel horizontal grid members 20 to form a plurality of horizontal grid structures supported by the upright members 16. The members 16, 18, 20 are typically manufactured from metal and typically welded or bolted together or a combination of both. The containers 10 are stacked between the members 16, 18, 20 of the grid framework structure 14, so that the grid framework structure 14 guards against horizontal movement of the stacks 12 of containers 10, and guides vertical movement of the containers 10. The horizontal gap (indicated by the label "D" in Figure 2) between stacks 12 of containers 10 in adjacent grid cells may be at least approximately 50 mm. For example, the gap may be approximately 50 mm, e.g. 50 mm, 100 mm, 150 mm, or any distance therebetween.

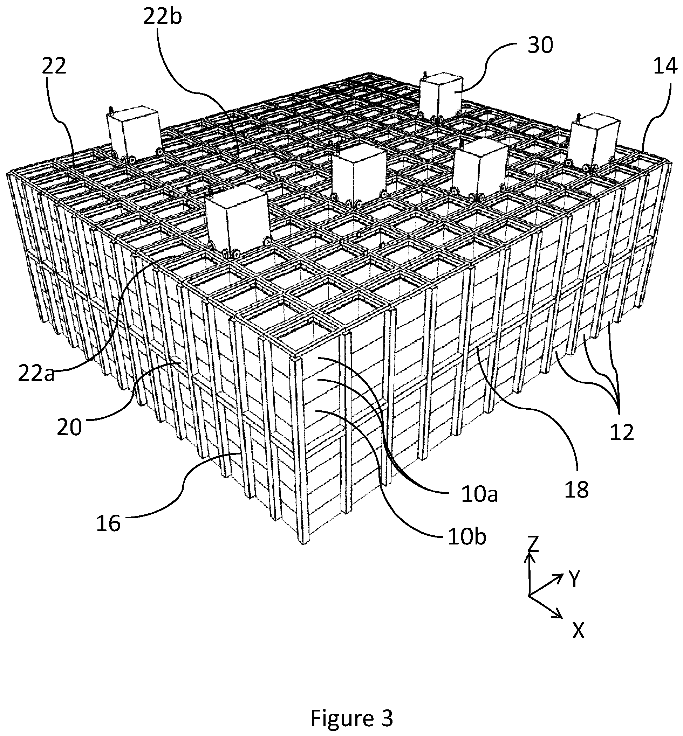

The top level of the grid framework structure 14 includes rails 22 arranged in a grid pattern across the top of the stacks 12. Referring additionally to Figure 3, the rails 22 support a plurality of load handling devices 30. A first set 22a of parallel rails 22 guide movement of the robotic load handling devices 30 in a first direction (for example, an X-direction) across the top of the grid framework structure 14, and a second set 22b of parallel rails 22, arranged perpendicular to the first set 22a, guide movement of the load handling devices 30 in a second direction (for example, a Y-direction), perpendicular to the first direction. In this way, the rails 22 allow movement of the robotic load handling devices 30 laterally in two dimensions in the horizontal X-Y plane, so that a load handling device 30 can be moved into position above any of the stacks 12.

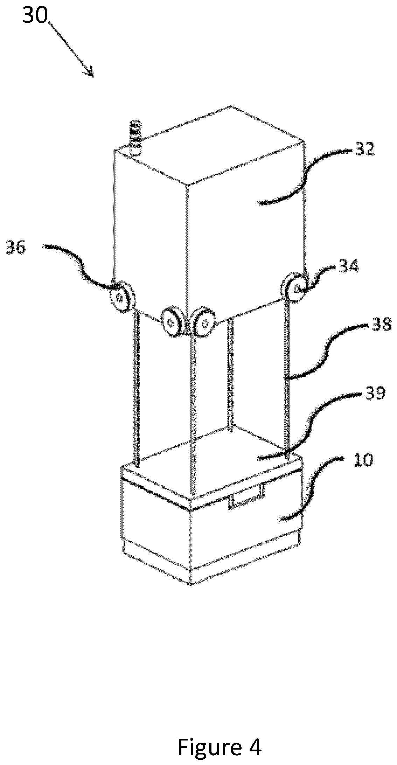

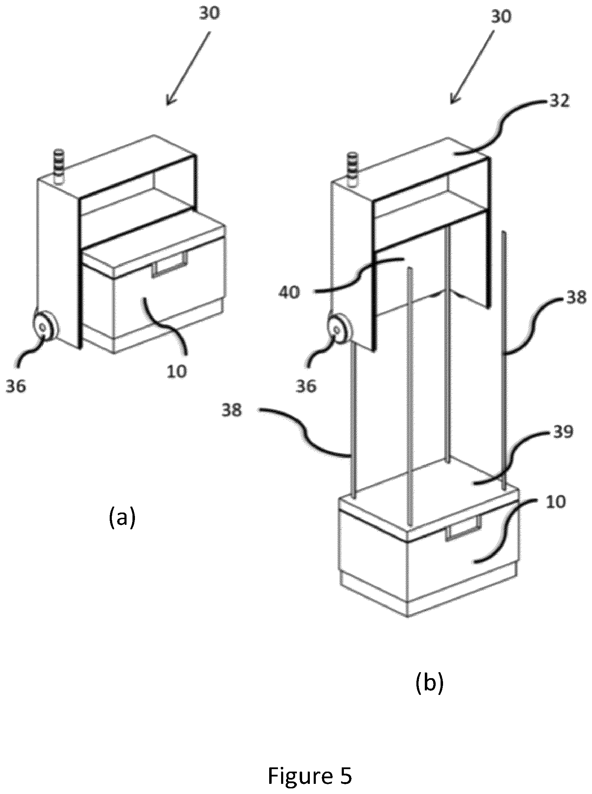

A known load handling device 30 shown in Figures 4 and 5 comprises a vehicle body 32 and is described in WO2015/019055, hereby incorporated by reference, where each load handling device 30 only covers one grid space of the grid framework structure 14. Here, the load handling device 30 comprises a wheel assembly comprising a first set of wheels 34 comprising a pair of wheels on the front of the vehicle body 32 and a pair of wheels 34 on the back of the vehicle 32 for engaging with the first set of rails or tracks to guide movement of the device in a first direction and a second set of wheels 36 comprising a pair of wheels 36 on each side of the vehicle 32 for engaging with the second set of rails or tracks to guide movement of the device in a second direction. Each of the set of wheels are driven to enable movement of the vehicle in X and Y directions respectively along the rails. One or both sets of wheels can be moved vertically to lift each set of wheels clear of the respective rails, thereby allowing the vehicle to move in the desired direction.

The load handling device 30 is equipped with a lifting device or crane mechanism to lift a storage container 10 from above. The crane mechanism comprises a winch tether or cable 38 wound on a spool or reel (not shown) and a grabber device 39. The lifting device comprises a set of lifting tethers 38 extending in a vertical direction and connected nearby or at the four corners of the grabber device 39 (one tether near each of the four corners of the grabber device) for releasable connection to a storage container 10. The grabber device 39 is configured to releasably grip the top of a storage container 10 to lift it from a stack 12 of containers in a storage system of the type shown in Figures 1 and 2.

The wheels 34, 36 are arranged around the periphery of a cavity or recess, known as a container-receiving recess 40, in the lower part. The recess is sized to accommodate the container 10 when it is lifted by the crane mechanism, as shown in Figure 5a and 5b. When in the recess, the container is lifted clear of the rails beneath, so that the vehicle can move laterally to a different location. On reaching the target location, e.g. another stack, an access point in the storage system or a conveyor belt, the container can be lowered from the container receiving portion and released from the grabber device.

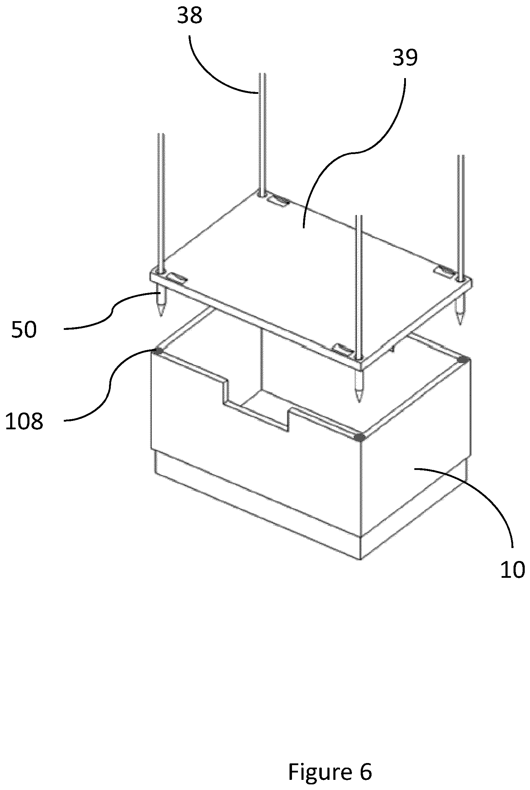

In the particular embodiment shown in Figure 6, the grabber device 39 comprises four locating pins or guide pins 50 nearby or at each corner of the grabber device 39 which mate or engage with corresponding holes or apertures 108 formed at four corners of the container 10. Four gripper elements (not shown) arranged at the bottom side of the grabber device 39 engage with the rim of the container. The locating pins 50 help to properly align the gripper elements with the rim of the container. The gripper elements may be driven to engage with the storage container 10 by a suitable drive mechanism housed within the grabber device 39, which is powered and controlled by signals carried through the tethers 38 themselves or through a separate control cable (not shown).

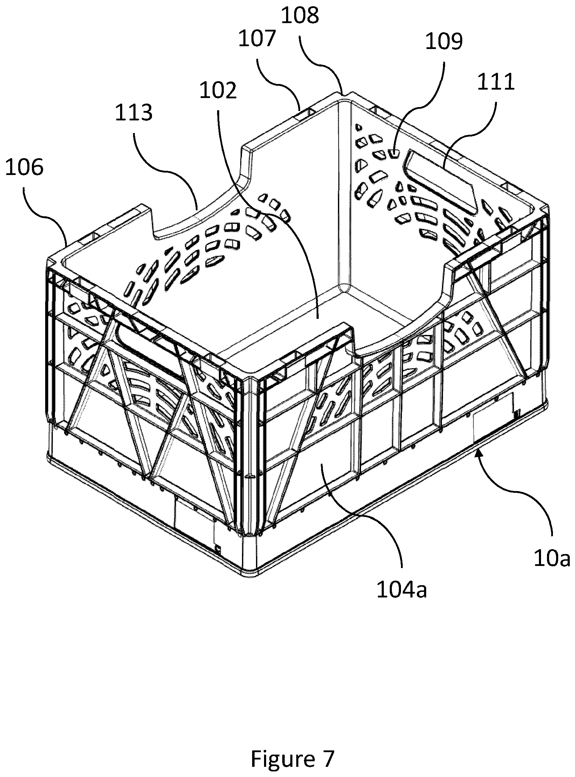

Figure 7 shows a perspective view of an example storage container 10a that may be stored in a stack within the grid framework structure 14. The storage container 10a has a substantially rectangular base 102 with four sidewalls 104a extending from the base to form an open-topped container. The sidewalls 104a are "vented" in that they comprise apertures 109 extending horizontally through the sidewalls 104a. The apertures 109 allow for ventilation and air circulation through the storage containers 10b when stacked, which may be useful when storing certain items and when the items in the storage containers 10b need to be held at a certain temperature in a temperature controlled environment (e.g. for chilled food items). The sidewalls 104a also comprise apertures 111 extending horizontally through the sidewalls 104a which act as handles and apertures/cutouts 113 which extending horizontally through the sidewalls 104a which allow other containers to be inserted into and removed from the storage container 10a more easily. The storage container 10b further comprises an overhanging rim 106 that forms the top surface of the storage container. The rim 106 comprises vertically extending apertures 107 for receiving gripping members of the grabber device 39 to allow the load handling device 30 to grab and lift the storage container 10a. The rim 106 further comprises four vertically extending apertures/cutouts 108 formed at the four corners of the container, which receive the locating pins 80 of the grabber device 39 to help locate the grabber device 39 into the correct position to align the gripping members with the apertures 107.

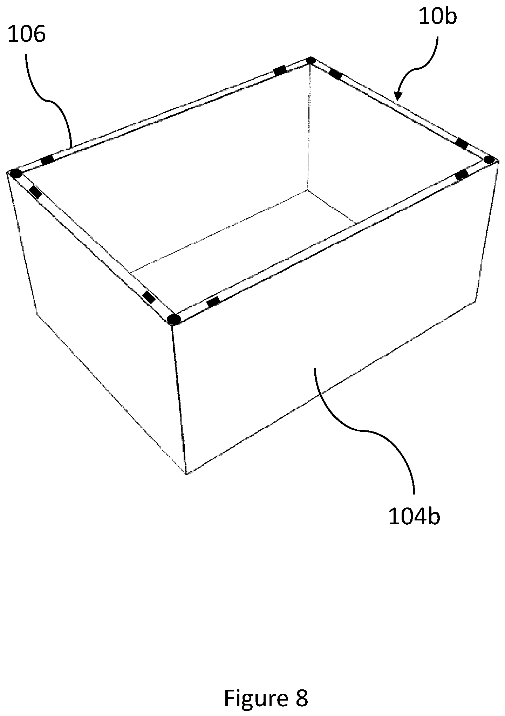

Figure 8 shows a perspective view of another example of a storage container 10b that may be stored in a stack within the grid framework structure 14. The storage container 10b is similar to storage container 10a in all respects (including its shape and the features of the rim 106), except that the sidewalls 104b are "solid". In particular, the sidewalls 104b do not comprise any apertures/cutouts extending horizontally through the sidewalls 104 (such as the apertures 109, 111 and 113 of storage container 10a). The sidewalls 104 may also be described as non-perforated. Due to the solid sidewalls 104, a stack of storage containers 10b will not have any significant openings for air to pass between the storage containers 10b in the stack.

It is desirable for the storage container 10 to be flame retardant, especially in a warehouse environment containing the gird structure framework 14 of Figure 1, where there may be hundreds or thousands of storage containers stacked within the structure.

In the present invention, the storage container 10 is made of a material comprising thermoplastic and a fire retardant.

The thermoplastic component of the material may be a polyolefin. For example, the thermoplastic may comprise polypropylene or polyethylene (e.g. HDPE), including copolymers thereof (or other polyolefin copolymers). The thermoplastic may comprise polycarbonate or acrylonitrile butadiene styrene (ABS). The thermoplastic component may be a single thermoplastic, or may comprise a blend of two or more thermoplastics, such as a blend of polypropylene and HDPE.

The fire retardant component of the material may be magnesium hydroxide, Mg(OH)₂. When heated, magnesium hydroxide undergoes endothermic decomposition and releases water vapour, thereby acting as a fire retardant. Magnesium hydroxide is also considered non-toxic, which is desirable because the storage container 10 may be used to store grocery items (i.e. food items) in use. Magnesium hydroxide is generally allowed by many national and supranational regulations to be present as an additive in plastic articles that are intended to come into contact with food, e.g. Commission Regulation (EU) No 10/2011 of 14 January 2011 on plastic materials and articles intended to come into contact with food.

On the other hand, introducing magnesium hydroxide into the thermoplastic material of the storage container 10 may have a detrimental effect on some of the mechanical properties of the storage container. In use, the storage container 10 may be located in a stack 12 of storage containers within the grid framework structure 14 and therefore it is desirable for each storage container 10 to be mechanically strong enough to support the weight of multiple containers above it. Furthermore, it is desirable for each storage container 10 to have small dimensional tolerances because the grabber device 39 of the load handling device 30 needs to be able to precisely engage with corresponding elements of the storage container 10 (e.g. apertures 108) in order to grab and lift each storage container 10 in a repeatable and reliable manner.

It is therefore desirable that the material of the storage container 10 gives the storage container 10 fire retardant properties while still maintaining physical properties that are adequate for the storage container 10 to be used in the storage system.

The material of the storage container 10 may comprise 20 to 55 wt% magnesium hydroxide. The material of the storage container 10 may comprise 30 to 50 wt% magnesium hydroxide. The material of the storage container 10 may comprise 40 to 50 wt% magnesium hydroxide. The material of the storage container 10 may comprise 45 to 50 wt% magnesium hydroxide. The material of the storage container 10 may comprise approximately 45 wt% magnesium hydroxide.

The remaining proportion of the material is preferably essentially thermoplastic. Put another way, the material of storage container 10 preferably consists essentially of thermoplastic and magnesium hydroxide. The use of the word "essentially" means that other substances may be present in trace or small amounts (e.g. less than or equal to 2 wt%, or less than or equal to 1 wt%), which may be a result of additives or impurities from the manufacturing process.

To increase mouldability and impact resistance of the storage containers, one or more impact modifiers may be added to the material before or during manufacture of the storage container in order to increase the impact resistance of the final product. Other known additives may be added to increase the mouldability of the material for manufacture, for example. The material may comprise one or more impact modifiers up to a total of 10 wt%. Any known or commercially available impact modifiers (e.g. core/shell impact modifiers having a rubber core and polymer shell) may be used to give the desired properties of the storage container. The impact modifiers are preferably food contact safe.

The material of the storage container 10 is preferably free of any halogenated fire retardants (e.g. chlorinated or brominated fire retardants) and/or phosphorous fire retardants, as at least some of these substances may be considered toxic and not suitable for contacting food items.

The storage container 10 may be formed by known manufacturing processes for moulding plastic articles, such as injection moulding or blow moulding.

The feedstock for the moulding process may be formed by incorporating the fire retardant agent (e.g. magnesium hydroxide) into the thermoplastic using conventional techniques, e.g. using a mixer, blender or extruder (single screw or twin screw). As mentioned above, commercially available impact modifiers may be added to the material in order to increase mouldability of the material and the impact resistance of the final product.

The magnesium hydroxide particles may be in the form of surface coated particles to aid dispersion of the particles in the thermoplastic. An example surface coating is vinyltrimethoxy silane.

As an alternative to magnesium hydroxide, aluminium hydroxide may be used in the storage container material in the same or similar weight percentages to the weight percentages specified above for magnesium hydroxide. Alternatively, a mixture of magnesium hydroxide and aluminium hydroxide may be used with overall weight percentages that are the same or similar to the weight percentages specified above for magnesium hydroxide.

### Examples

### Cone calorimeter testing

Example polypropylene material samples containing varying proportions of magnesium hydroxide were manufactured using an injection moulding process for cone calorimeter testing. The proportions of magnesium hydroxide tested were: 20 wt%, 27.5 wt%, 35 wt%, 40 wt%, 45 wt%, 50 wt% and 55 wt%.

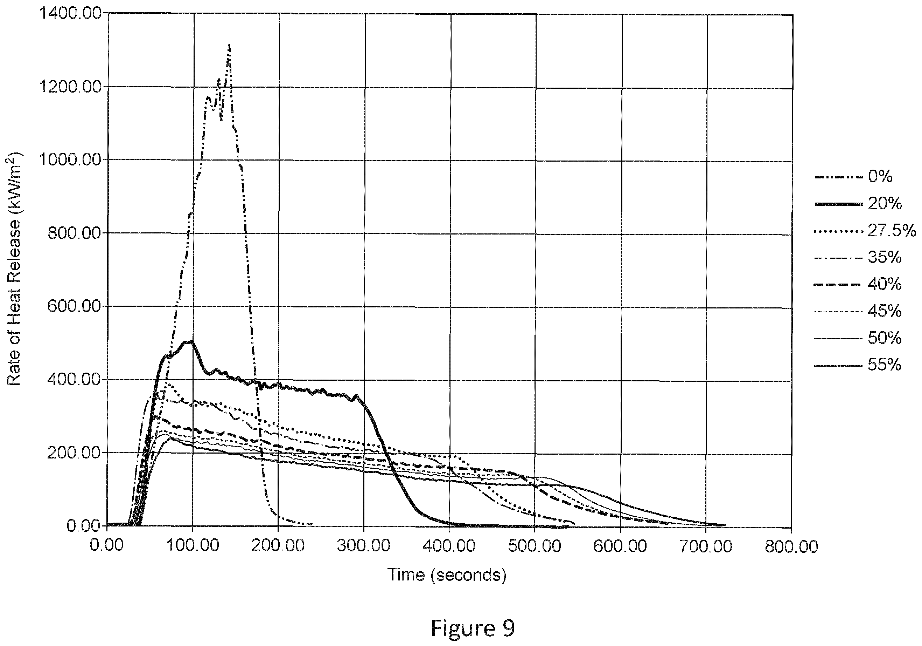

Fire testing of each example sample was carried out using a cone calorimeter test according to the ASTM E1354 test method using a heat flux of 50 kW/m². As a comparative example, an injection-moulded polypropylene sample comprising no (i.e. 0%) magnesium hydroxide was also tested. The rate of heat release over time for each sample is shown in the graph of Figure 9.

As Figure 9 shows, the addition of magnesium hydroxide at a proportion of at least 20 wt% decreased the heat release rate by approximately 50% compared to the comparative example containing no magnesium hydroxide. The heat release rate lowered as the proportion of magnesium hydroxide increased, but there were diminishing returns as the proportion of magnesium hydroxide increased above about 45 wt%.

### Mechanical properties

The mechanical properties of injection moulded samples containing varying proportions of magnesium hydroxide were also tested. The injection moulding feedstock was a mix of polypropylene and magnesium hydroxide. The proportions of magnesium hydroxide tested were: 20 wt%, 27.5 wt%, 35 wt%, 45 wt%, 50 wt%, 55 wt% and 60 wt%. To improve mouldability and toughness of the material, one or more impact modifiers totalling 10 wt% were included in the material for the samples containing 45 wt% and above magnesium hydroxide

The mechanical tests carried out for each sample were: shore hardness using the ASTM D2240 test method (type D with a 10 second delay); specific gravity using the ASTM D792 test method; tensile strength using the ASTM D412A test method; flexural modulus using the ASTM D790 test method and Izod impact test using the ASTM D4812 test method.

The results are summarised in Table 1. Table 1 also shows some mechanical property data from the polypropylene material containing no magnesium hydroxide as a comparative example.

**Table 1**

| **wt% Mg(OH)₂** | **Shore hardness** | **Specific gravity** | **Tensile strength (MPa)** | **Flexural modulus (MPa)** | **Izod impact test (J/m)** |
|---|---|---|---|---|---|
| 0 | - | 0.9 | 24 | 1170 | 91 |
| 20 | 63.9 | 1.006 | 24 | 2104 | 152 |
| 27.5 | 64.5 | 1.051 | 20 | 2255 | 146 |
| 35 | 65.3 | 1.113 | 17 | 2442 | 150 |
| 45 | 65 | 1.19 | 24 | 1533 | 148 |
| 50 | 63 | 1.261 | - | 1703 | 153 |
| 55 | 64 | 1.309 | - | 1993 | 155 |
| 60 | 65 | 1.366 | - | 2227 | 163 |

### Storage containers

Polypropylene storage containers containing varying proportions of magnesium hydroxide were manufactured using an injection moulding process. Polypropylene storage containers containing the following proportions of magnesium hydroxide were formed: 0 wt%, 20 wt%, 35 wt%, 45 wt%, 50 wt%, 55 wt% and 60 wt%. To improve mouldability and toughness of the materials containing 45 wt% and above magnesium hydroxide, one or more impact modifiers totalling 10 wt% were included in the material feedstock. The storage containers were approximately 650 mm in length, 450 mm in width, 360 mm in height and 20 mm in thickness.

### Burn tests

In a first set of tests, three storage containers were arranged in a vertical stack and ignited to observe the behaviour of the resulting fire. Separate tests were carried out for polypropylene storage containers containing 0 wt%, 35 wt%, and 45 wt% magnesium hydroxide. It was observed that the stacks of storage containers containing magnesium hydroxide had the following advantageous effects compared to the stack of storage containers containing no magnesium hydroxide: (i) the stack retained its structural integrity (i.e. remained upright) for longer; (ii) a longer amount of time passed before the burning storage container material started melting/dripping; and (iii) the fire did not spread horizontally when the stacks were quenched with water.

A second set of tests were carried out on grid framework structures loaded with multiple stacks of storage containers to see how effective the storage containers were at preventing or slowing the spread of a fire within the grid framework structure.

Grid framework structures were constructed using upright members and horizontal members arranged to form a 10x7 grid pattern with grid columns tall enough to hold stacks of up to 21 containers. A sprinkler system was present above the grid framework structure. Stacks of storage containers containing a fuel were loaded into the grid framework structure in a predetermined arrangement, with at least some of the stacks containing 21 storage containers. The horizontal gap between stacks of storage containers in adjacent grid cells was approximately 100 mm. A central region was ignited to start a fire and the time taken for the fire to horizontally propagate to the edge of the grid under sprinkler control was measured (or the time for the fire to be put out by the sprinklers before it reached the edge of the grid). One test was carried out with polypropylene storage containers containing 0 wt% magnesium hydroxide and "vented" sidewalls (as defined above), which resulted in the fire reaching the edge of the grid in 8 minutes. Another test was carried out with polypropylene storage containers containing 45 wt% magnesium hydroxide and "vented" sidewalls, which resulted in the fire reaching the edge of the grid in 30 minutes. Another further test was carried out with polypropylene storage containers containing 45 wt% magnesium hydroxide and "solid" sidewalls (as defined above), which resulted in the fire reaching the edge of the grid in 90 minutes. These tests showed that polypropylene storage containers containing magnesium hydroxide significantly slowed the horizontal propagation of a fire within a grid framework structure holding stacks of storage containers. Furthermore, the tests also showed that storage containers with "solid" sidewalls significantly slowed the horizontal propagation of the fire compared to storage containers with "vented" sidewalls.

## Claims

1. A storage system comprising:
a plurality of grid members (18, 20) arranged in a grid pattern to form a grid structure comprising a plurality of grid cells;
one or more stacks of storage containers (10), wherein each stack is located vertically below a respective grid cell, and each storage container (10) in each stack is made of a material comprising thermoplastic and a fire retardant agent; and
at least one load handling device (30) comprising a grabber device (39) operative to move on the grid structure to releasably grab one or more of the storage containers from each stack in the storage system;
**characterised in that** the material comprises 30 to 50 wt% magnesium hydroxide.

2. The storage system according to claim 1, wherein the material comprises 40 to 50 wt% magnesium hydroxide or approximately 45 wt% magnesium hydroxide.

3. The storage system according to claim 1 or 2, wherein the thermoplastic comprises a polyolefin or polypropylene or polyethylene or high-density polyethylene.

4. The storage system according to any one of the preceding claims, wherein the material comprises one or more impact modifiers.

5. The storage system according to any one of the preceding claims, wherein each storage container (10) comprises one or more sidewalls, wherein the sidewalls are non-perforated.

6. The storage system according to any one of the preceding claims, wherein each storage container (10) has been formed by injection moulding or blow moulding.

7. The storage system according to any one of the preceding claims, further comprising a plurality of upright columns (16) supporting the grid structure from below and arranged to form a plurality of vertical storage locations for each stack of storage containers (10).

8. The storage system according to any one of the preceding claims, wherein the horizontal gap between stacks of storage containers (10a) in adjacent grid cells is at least approximately 50 mm.

9. A storage container (10a) for storing one or more items in a storage system as defined in any one of claims 1 to 8, the storage container comprising a base (102), at least one sidewall (104a) extending from the base (102), and a rim (106), wherein the rim (106) defines at least one aperture (107) for engaging with a corresponding member of a grabber device (39), and wherein the storage container (10a) is made of a material comprising thermoplastic and a fire retardant agent;
**characterised in that** the material comprises 30 to 50 wt% magnesium hydroxide.

10. The storage container (10a) according to claim 9, wherein the material comprises 40 to 50 wt% magnesium hydroxide or approximately 45 wt% magnesium hydroxide.

11. The storage container (10a) according to claim 9 or 10, wherein the thermoplastic comprises a polyolefin or polypropylene or polyethylene or high-density polyethylene.

12. The storage container (10a) according to any one of claims 9 to 11, wherein the material comprises one or more impact modifiers.

13. The storage container (10a) according to any one of the claims 9 to 12, wherein each storage container comprises one or more sidewalls (104a), wherein the sidewalls are non-perforated.

14. The storage container (10a) according to any one of claims 9 to 13, wherein the storage container has been formed by injection moulding or blow moulding.

## Patentansprüche

1. Lagersystem, umfassend:
eine Vielzahl von Gitterelementen (18, 20), die in einem Gittermuster angeordnet sind, um eine Gitterstruktur zu bilden, die eine Vielzahl von Gitterzellen umfasst;
einen oder mehrere Stapel von Lagerbehältern (10), wobei sich jeder Stapel vertikal unter einer jeweiligen Gitterzelle befindet und jeder Lagerbehälter (10) in jedem Stapel aus einem Material hergestellt ist, das Thermoplast und ein feuerhemmendes Mittel umfasst; und
mindestens eine Lasthandhabungsvorrichtung (30), die eine Greifervorrichtung (39) umfasst, die betriebsfähig ist, um sich auf der Gitterstruktur zu bewegen, um einen oder mehrere der Lagerbehälter von jedem Stapel in dem Lagersystem lösbar zu greifen;
**dadurch gekennzeichnet, dass** das Material 30 bis 50 Gew.-% Magnesiumhydroxid umfasst.

2. Lagersystem nach Anspruch 1, wobei das Material 40 bis 50 Gew.-% Magnesiumhydroxid oder ungefähr 45 Gew.-% Magnesiumhydroxid umfasst.

3. Lagersystem nach einem der Ansprüche 1 oder 2, wobei der Thermoplast ein Polyolefin oder Polypropylen oder Polyethylen oder Polyethylen hoher Dichte umfasst.

4. Lagersystem nach einem der vorhergehenden Ansprüche, wobei das Material einen oder mehrere Schlagzähigkeitsmodifikatoren umfasst.

5. Lagersystem nach einem der vorhergehenden Ansprüche, wobei jeder Lagerbehälter (10) eine oder mehrere Seitenwände umfasst, wobei die Seitenwände nicht perforiert sind.

6. Lagersystem nach einem der vorhergehenden Ansprüche, wobei jeder Lagerbehälter (10) durch Spritzgießen oder Blasformen gebildet wurde.

7. Lagersystem nach einem der vorhergehenden Ansprüche, ferner umfassend eine Vielzahl von aufrechten Säulen (16), die die Gitterstruktur von unten tragen und angeordnet sind, um eine Vielzahl von vertikalen Lagerstellen für jeden Stapel von Lagerbehältern (10) zu bilden.

8. Lagersystem nach einem der vorhergehenden Ansprüche, wobei der horizontale Spalt zwischen Stapeln von Lagerbehältern (10a) in benachbarten Gitterzellen mindestens ungefähr 50 mm beträgt.

9. Lagerbehälter (10a) zum Lagern eines oder mehrerer Gegenstände in einem Lagersystem, wie in einem der Ansprüche 1 bis 8 definiert ist, wobei der Lagerbehälter eine Basis (102), mindestens eine Seitenwand (104a), die sich von der Basis (102) erstreckt, und einen Rand (106) umfasst, wobei der Rand (106) mindestens eine Öffnung (107) zum Eingriff mit einem entsprechenden Element einer Greifervorrichtung (39) definiert und wobei der Lagerbehälter (10a) aus einem Material hergestellt ist, das Thermoplast und ein feuerhemmendes Mittel umfasst;
**dadurch gekennzeichnet, dass** das Material 30 bis 50 Gew.-% Magnesiumhydroxid umfasst.

10. Lagerbehälter (10a) nach Anspruch 9, wobei das Material 40 bis 50 Gew.-% Magnesiumhydroxid oder ungefähr 45 Gew.-% Magnesiumhydroxid umfasst.

11. Lagerbehälter (10a) nach einem der Ansprüche 9 oder 10, wobei der Thermoplast ein Polyolefin oder Polypropylen oder Polyethylen oder Polyethylen hoher Dichte umfasst.

12. Lagerbehälter (10a) nach einem der Ansprüche 9 bis 11, wobei das Material einen oder mehrere Schlagzähigkeitsmodifikatoren umfasst.

13. Lagerbehälter (10a) nach einem der Ansprüche 9 bis 12, wobei jeder Lagerbehälter eine oder mehrere Seitenwände (104a) umfasst, wobei die Seitenwände nicht perforiert sind.

14. Lagerbehälter (10a) nach einem der Ansprüche 9 bis 13, wobei der Lagerbehälter durch Spritzgießen oder Blasformen gebildet wurde.

## Revendications

1. Système de stockage, comprenant :
une pluralité d'éléments de grille (18, 20) agencés selon un motif de grille pour former une structure de grille comprenant une pluralité de cellules de grille ;
une ou plusieurs piles de contenants de stockage (10), dans lequel chaque pile est située verticalement sous une cellule de grille respective, et chaque contenant de stockage (10) dans chaque pile est constitué d'un matériau comprenant un thermoplastique et un agent ignifuge ; et
au moins un dispositif de manipulation de charge (30) comprenant un dispositif de préhension (39) opérationnel pour se déplacer sur la structure de grille pour saisir de manière libérable un ou plusieurs des contenants de stockage à partir de chaque pile dans le système de stockage ;
**caractérisé en ce que** le matériau comprend de 30 à 50 % en poids d'hydroxyde de magnésium.

2. Système de stockage selon la revendication 1, dans lequel le matériau comprend de 40 à 50 % en poids d'hydroxyde de magnésium, ou environ 45 % en poids d'hydroxyde de magnésium.

3. Système de stockage selon la revendication 1 ou 2, dans lequel le thermoplastique comprend une polyoléfine ou un polypropylène ou un polyéthylène ou un polyéthylène haute densité.

4. Système de stockage selon l'une quelconque des revendications précédentes, dans lequel le matériau comprend un ou plusieurs modificateurs d'impact.

5. Système de stockage selon l'une quelconque des revendications précédentes, dans lequel chaque contenant de stockage (10) comprend une ou plusieurs parois latérales, dans lequel les parois latérales sont non perforées.

6. Système de stockage selon l'une quelconque des revendications précédentes, dans lequel chaque contenant de stockage (10) a été formé par moulage par injection ou moulage par soufflage.

7. Système de stockage selon l'une quelconque des revendications précédentes, comprenant en outre une pluralité de colonnes verticales (16) supportant la structure de grille à partir du dessous et agencées pour former une pluralité d'emplacements de stockage verticaux pour chaque pile de contenants de stockage (10).

8. Système de stockage selon l'une quelconque des revendications précédentes, dans lequel l'espace horizontal entre les piles de contenants de stockage (10a) dans les cellules de grille adjacentes est d'au moins environ 50 mm.

9. Conteneur de stockage (10a) pour stocker un ou plusieurs articles dans un système de stockage tel que défini dans l'une quelconque des revendications 1 à 8, le contenant de stockage comprenant une base (102), au moins une paroi latérale (104a) s'étendant depuis la base (102), et un rebord (106), dans lequel le rebord (106) définit au moins une ouverture (107) pour une mise en prise avec un élément correspondant d'un dispositif de préhension (39), et dans lequel le contenant de stockage (10a) est constitué d'un matériau comprenant un thermoplastique et un agent ignifuge ;
**caractérisé en ce que** le matériau comprend de 30 à 50 % en poids d'hydroxyde de magnésium.

10. Conteneur de stockage (10a) selon la revendication 9, dans lequel le matériau comprend de 40 à 50 % en poids d'hydroxyde de magnésium, ou environ 45 % en poids d'hydroxyde de magnésium.

11. Conteneur de stockage (10a) selon la revendication 9 ou 10, dans lequel le thermoplastique comprend une polyoléfine ou un polypropylène ou un polyéthylène ou un polyéthylène haute densité.

12. Conteneur de stockage (10a) selon l'une quelconque des revendications 9 à 11, dans lequel le matériau comprend un ou plusieurs modificateurs d'impact.

13. Conteneur de stockage (10a) selon l'une quelconque des revendications 9 à 12, dans lequel chaque contenant de stockage comprend une ou plusieurs parois latérales (104a), dans lequel les parois latérales sont non perforées.

14. Conteneur de stockage (10a) selon l'une quelconque des revendications 9 à 13, dans lequel le contenant de stockage a été formé par moulage par injection ou moulage par soufflage.
